Europäisches Patentamt

(19) European Patent Office

Office européen des brevets

(11) Publication number: **0 237 496 B1**

## (12) EUROPEAN PATENT SPECIFICATION

(45) Date of publication of patent specification :
31.07.91 Bulletin 91/31

(51) Int. Cl.$^5$: **F16K 15/20**

(21) Application number: **87830078.9**

(22) Date of filing: **03.03.87**

(54) Improvement in a valve.

Consolidated with 87901619.4/0296163
(European application No./publication No.) by
decision dated 18.07.90.

(30) Priority: **04.03.86 IT 2112686**

(43) Date of publication of application:
**16.09.87 Bulletin 87/38**

(45) Publication of the grant of the patent:
**31.07.91 Bulletin 91/31**

(84) Designated Contracting States:
**AT BE CH DE ES FR GB GR IT LI LU NL SE**

(56) References cited:
**EP-A- 106 966**
**BE-A- 672 880**
**FR-A- 2 340 493**
**GB-A- 1 044 423**
**US-A- 3 489 166**
**US-A- 4 340 080**

(73) Proprietor: **BRIDGE PRODUCTS, INC.**
**2215 Sanders Road**
**Northbrook, IL (US)**

(72) Inventor: **Pagani, Ezio**
**Via degli Albani, 17**
**I-24100 Bergamo (IT)**

(74) Representative: **Dr. Ing. A. Racheli & C.**
**Viale San Michele del Carso, 4**
**I-20144 Milano (IT)**

EP 0 237 496 B1

## Description

This invention relates to valves of the type comprising a valve body which defines a through passageway and a constriction at an intermediate portion of the passageway, and a valve pin slideably disposed in the passageway and carrying a sealing member positioned to bear against a sealing surface defined by the constriction to seal the passageway, wherein the valve pin defines a flange adjacent the sealing member, said flange having an external diameter slightly larger than the minimum diameter of the passageway at the constriction such that the flange is sized to pass through the constriction without destruction of the pin or FR-A-2 340 493 describes a valve of the type comprising a valve body which defines an outside part, an inside part, a through passageway and a constriction at an intermediate portion of the passageway, and a valve pin slideably disposed in the passageway and carrying a sealing member positioned to bear against a sealing surface defined by the constriction to seal the passageway, wherein at least one of the valve body and the valve pin is formed of a resilient material, and wherein the valve pin defines a flange having an external diameter slightly larger than the minimum diameter of the passageway at the constriction such that the flange is sized such that temporary deformation of at least one of the valve body and the valve pin allows the flange to pass through the constriction without destruction of the pin or the valve body. EP-A-106 966 teaches in accordance with the features of the first part of claim 1 a valve of the type comprising a valve body which defines an outside part, an inside part, a through passageway and a constriction at an intermediate portion of the passageway, and a valve pin slideably disposed in the passageway and carrying a sealing member positioned to bear against a sealing surface provided in the inside part which is subjected to internal pressure to seal the passageway, wherein at least one of the valve body and the valve pin is formed of a resilient material, and wherein the valve pin defines a flange having an external diameter slightly larger than a minimum diameter of the passageway at the constriction sized such that temporary deformation of at least one of the valve body and the valve pin allows the flange to pass through the constriction without destruction of the pin or the valve body.

A high resistance to internal pressure, higher than that of the so far used valves, is necessary to meet the manufacturer's request of always higher working pressures.

The above mentioned aim has been reached, as claimed in claim 1, i.e. by the provision of means in the valve body for defining a step having a first pin restraining surface oriented substantially transverse to the axis, around the passageway adjacent to the constriction wherein said first pin restraining surface is positioned between said sealing surface and said constriction ; and means for defining on the flange a shelf having a second pin restraining surface oriented substantially transverse to the axis and positioned to bear against the first pin restraining surface to prevent the pin from being expelled out of the passageway towards the outside part.

The valve body may also define a flared conic surface around the passageway on the side of the constriction opposite the step. Said flared conic surface may be inclined at an angle in the range of 27°-33° with respect to the axis ; in particular the angle may be 30°.

The flared conic surface also defines an external diameter which is at least 5% greater than the external diameter of the flange.

The separation between the shelf and the step may be within the range of 0.2 mm - 1 mm when the pressure differential across the... sealing surface is zero.

Preferably at least one of the pin and the valve body is formed of a plastic material, such as acetyl copolymer preferably having at least one of the following characteristics : to be black, shock resistant, not subject to oxidation, waterproof, not subject to photodegradation, and UV resistant.

The external diameter of the flange is about 5%-9% greater than the minimum diameter of the passageway at the constriction.

The pin may also have a pointed internal end.

The sealing member may have at rest a shape of a cylindrical tube ; in this case its internal diameter may be about 25% of its length. Moreover the pin may have a seat to receive the sealing member which has a frusto conical shape.

The valve may also comprise a spring positioned around the valve pin to bear on the valve body to bias the flange towards the step and the sealing member against the sealing surface.

All these characteristics improve the valve's performance and lower the costs at the same time.

Particularly, they enable an easy and automatic assembly. Said assembly consists of the following steps :

a) the valve body is arranged vertically with its outside part upwards ;

b) a spring, if desired, is inserted in the body ; the spring falls because of its weight and stops just above the constriction of the body where a shoulder is provided ;

c) the pin is inserted ; during this operation a pointed end provided at the inside part of the pin guides the latter inside the passageway centering it ;

d) the insertion is continued temporarily deforming the valve body and forcing the flange through the constriction of the body ;

e) the pin is released and remains in position inside the body, a shelf of the pin abutting against a step thus preventing the expulsion of the pin ;

f) the sealing member is inserted from below while the pin is lowered, its insertion being facilitated by the pointed end of the pin.

The valve's field of use is greatly widen by the existence of the step and the shelf, the pin's bursting pressure being about 60% higher than that of a similar valve without step and shelf. Also the visible performance of the pin is greatly improved by the presence of the step and shelf ; in fact in the known construction the pin moves with respect to the body at higher pressures.

The present invention will be now explained according to an exemplary embodiment that has been shown in the enclosed drawings in which :

Fig. 1 is a view of the sectioned valve ;

Fig. 2 is an enlarged view of the detail indicated in the outlined circle of Fig. 1 ;

Figs. 3 to 7 show subsequent steps of the assembly.

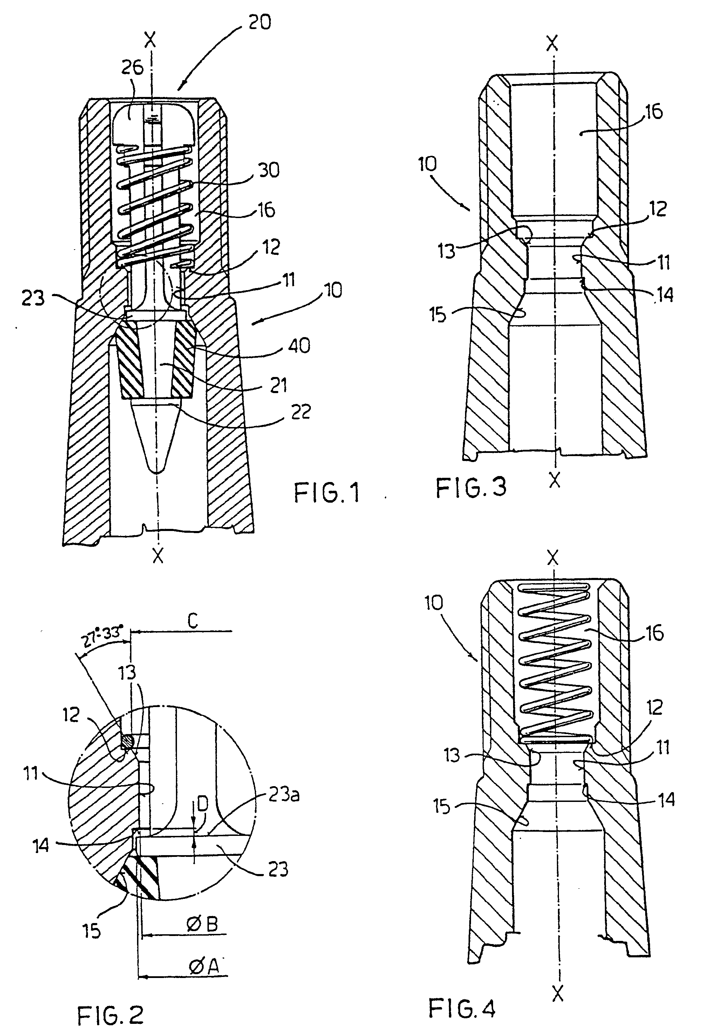

As it is visible from Fig. 1, the valve comprises a limited number of parts : A body 10 defining a passageway 16, a pin 20, a sealing member 40 and, if desired, a spring 30.

A constriction 11 is provided inside said valve body 10 substantially dividing said body in two : an outside part (shown above) and an inside part (shown below). The outside part provides a seat for spring 30 that leans against a shoulder 12 ; a flared conic surface 13 is provided in body 10 between shoulder 12 and constriction 11. The conic surface 13 is inclined with respect to valve's axis X-X of at angle comprised between 27 and 33°, in particular the angle may be 30°.

The inside part of constriction 11 is provided with a step 14. Starting from this step 14 and going towards the valve's inside a further conic surface 15 is provided against which the top part of the sealing member 40 leans. This surface will be called sealing surface 15.

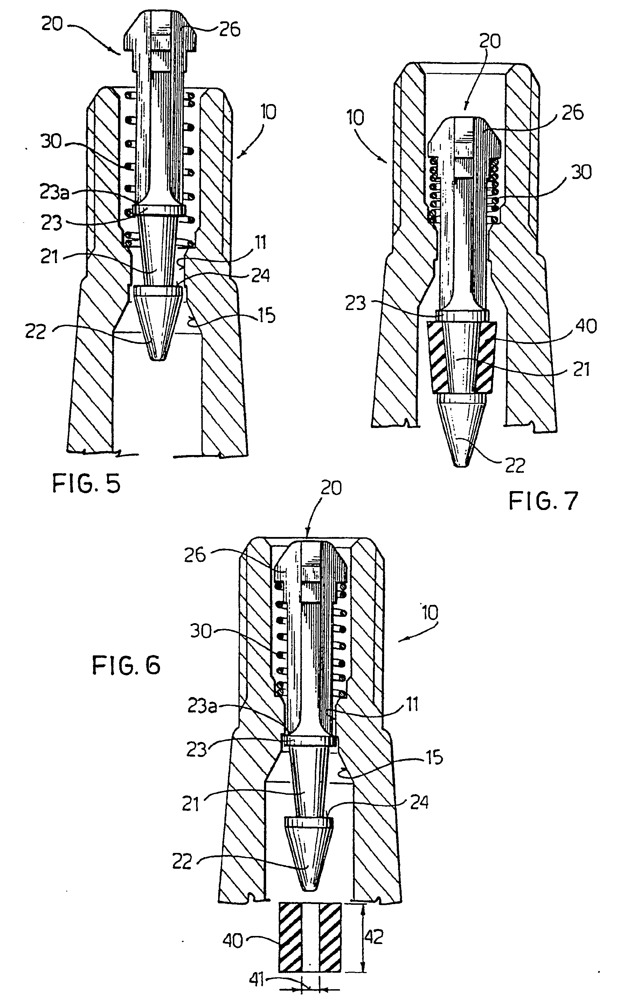

The sealing member 40 at rest is a cylindrical tube having an internal diameter 41 (Fig. 6) which is about 25% of its length 42.

The pin 20 suitably shaped is housed in body 10. Said pin is provided with a head 26 to create a further abutment for spring 30. Pin 20 is also provided with a flange 23 forming a shelf 23a which faces step 14 and abuts against it at the highest pressures. Deeper inside with respect to flange 23 pin 20 is provided with a truncated cone seat 21 for receiving the sealing member 40, and pointed end 22 forming a further abutment 24 for keeping sealing member 40 in place.

The flange 23's external diameter A (Fig. 2) is preferably about a 5 to 9% bigger than minimum diameter B of the body's constriction 11.

The separation D existing at rest with no pressure differential across the sealing surface 15 - is preferably within the range of 0,2mm-1mm.

Moreover at rest the maximum external diameter C of the flared conic surface 13 is preferably at least 5% greater than the external diameter A of the flange 23.

For the valve's assembly the following steps are foreseen :

a) valve body 10 is kept standing (Fig.3) ;

b) spring 30 is inserted in the passageway 16 (Fig.4) ;

c) pin 20 is inserted in the valve body inside spring 30 (Fig.5) ;

d) pin 20 is given a sharp knock so that flange 23 goes beyond constriction 11 ;

e) pin 20 is released and remains inserted because shelf 23a abuts against step 14 (Fig. 6);

f) sealing member 40 is mounted from the bottom, while pin 20 is lowered (Fig. 7) ; sealing member 40 is seated on cone seat 21.

Pointed end 24 is particularly useful during the assembly for guiding pin 20 in body 10 and for facilitating the introduction of sealing member 40.

When pin 20 is positioned, the abutment existing between step 14 and shelf 23a avoids the expulsion due to the action of spring 30 when the sealing member 40 is not present.

## Claims

1. A valve of the type comprising a valve body (10) which defines an outside part, an inside part, a through passageway (16) and a constriction (11) at an intermediate portion of the passageway (16), and a valve pin (20) slideably disposed in the passageway and carrying a sealing member (40) positioned to bear against a sealing surface (15) provided in the inside part which is subjected to internal pressure to seal the passageway (16), wherein at least one of the valve body (10) and the valve pin (20) is formed of a resilient material, and wherein the valve pin (20) defines a flange (23) having an external diameter (A) slightly larger than a minimum diameter (B) of the passageway (16) at the constriction (11) sized such that temporary deformation of at least one of the valve body (10) and the valve pin (20) allows the flange (23) to pass through the constriction (11) without destruction of the pin (20) or the valve body (10), <u>characterized</u> by the provision of means for defining in the valve body (10) a step (14) having a first pin restraining surface oriented substantially transverse to the axis, around the passageway (16) adjacent to the constriction (11) wherein said first pin restraining surface is positioned between said sealing surface (15) and said constriction (11) ; and means for defining on the flange (23) a shelf (23a) having a second pin restraining surface oriented substantially transverse to the axis and positioned to bear against the first pin restraining surface to prevent the pin (20) from being expelled out of the passageway (16) towards the outside part.

2. A valve according to Claim 1 wherein the first and second pin restraining surfaces are annular in shape, and wherein the valve body (10) defines a flared conic surface (13) around the passageway (16) on the side of the constriction (11) opposite the step (14), characterized in that said flared conic surface (13) is inclined at an angle in the range of 27°-33° with respect to the axis.

3. The valve of Claim 2 characterized in that the angle is 30°.

4. The valve of Claim 2 characterized in that said flared conic surface (13) defines an external diameter (C) which is at least 5% greater than the external diameter (A) of the flange (23).

5. The valve of Claim 1 characterized in that a separation (D) between the shelf (23a) and the step (14) is within a range of 0.2 mm - 1 mm when the pressure differential across the sealing surface (15) is zero.

6. The valve of Claim 1 characterized in that at least one of the pin (20) and the valve body (10) is formed of a plastic material.

7. The valve of Claim 6 characterized in that the plastic material is an acetyl co-polymer preferably having at least one of the following characteristics : to be black, shock resistant, not subject to oxidation, waterproof, not subject to photodegradation, and UV resistant.

8. The valve of Claim 1 characterized in that the external diameter (A) of the flange (23) is about 5%-9% greater than the minimum diameter (B) of the passageway (16) at the constriction (11).

9. The valve of Claim 1 characterized in that the pin (20) has a pointed internal end (22).

10. The valve of Claim 1 wherein the sealing member (40) has at rest a shape of cylindrical tube, characterized in that the pin (20) receiving the sealing member (40) has a frusto-conical shape.

11. The valve of Claim 10 characterized in that the sealing member (40) has an internal diameter (41) which is about 25% of its length (42).


**Patentansprüche**

1. Ventil, das einen Ventilkörper (10) umfaßt, der einen äußeren Teil, einen inneren Teil, einen Durchgang (16) und in einem Zwischenteil des Durchgangs (16) eine Verjüngung (11) und eine im Durchgang gleitbar angeordnete Ventilnadel (20) begrenzt, wobei die Ventilnadel ein Dichtelement (40) trägt, das so angeordnet ist, daß es sich gegen eine Dichtfläche (15) abstützt, die von inneren Teil begrenzt ist, die dem Innendruck unterliegt, um den Durchgang (16) zu schließen, wobei wenigstens eines der Elemente, Ventilkörper (10) oder Ventilnadel (20), aus elastischem Werkstoff gebildet ist und die Ventilnadel (20) einen Flansch (23) bildet, dessen äußeren Durchmesser (A) etwas größer als der Mindestdurchmesser (B) des Durchgangs (16) in Ubereinstimmung mit der Verjüngung (11) ist, die so bemessen ist, daß die vorübergehende Verformung wenigstens eines der Elemente, Ventilkörper (10) oder Ventilnadel (20), dem Flansch (23) ermöglicht, durch die Verjüngung (11) zu gehen, ohne die Ventilnadel (20) oder den Ventilkörper (10) zu beschädigen, dadurch gekennzeichnet, daß Mittel vorgesehen sind, die geeignet sind, im Ventilkörper (10) einen Absatz (14) mit einer ersten Dichtfläche der Nadel zu begrenzen, die in waagrechter Richtung zur Achse um den Durchgang (16) in dem an der Verjüngung (11) angrenzenden Bereich orientiert ist, wobei die erste Dichtfläche (15) der Nadel zwischen der Dichtfläche (15) und der Verjüngung (11) angeordnet ist, sowie Mittel zum Begrenzen einer Konsole (23a) auf dem Flansch (23) mit einer zweiten Dichtfläche der Nadel, die im wesentlichen in Querrichtung zur Achse orientiert und so angeordnet ist, daß sie sich gegen die erste Dichtfläche der Nadel abstützt, um zu verhindern, daß die Nadel (20) aus dem Durchgang (16) gegen den äußeren Teil gestossen wird.

2. Ventil nach Anspruch 1, bei dem die erste und zweite Dichtfläche der Nadel ringförmig sind, wobei der Ventilkörper (10) eine konisch ausgesenkte Oberfläche um den Durchgang (16) auf dem Teil der Verjüngung (11) begrenzt, der dem Absatz (14) gegenüberliegt, dadurch gekennzeichnet, daß die konisch ausgesenkte Oberfläche (13) in einem Winkel von 27° bis 33° zur Achse geneigt ist.

3. Ventil nach Anspruch 2, dadurch gekennzeichnet, daß der Winkel 30° ist.

4. Ventil nach Anspruch 2, dadurch gekennzeichnet, daß die konisch ausgesenkte Fläche (13) einen Außendurchmesser (C) begrenzt, der wenigstens 5% größer als der Außendurchmesser (A) des Flanschs (23) ist.

5. Ventil nach Anspruch 1, dadurch gekennzeichnet, daß der Abstand (D) zwischen der Konsole (23a) und dem Absatz (14) 0,2 mm - 1 mm beträgt, wenn der Differenzialdruck durch die Dichtfläche (15) null ist.

6. Ventil nach Anspruch 1, dadurch gekennzeichnet, daß wenigstens eines der Elemente, d.h. Nadel (20) und Ventilkörper (10), aus verformbaren Werkstoff gebildet ist.

7. Ventil nach Anspruch 6, dadurch gekennzeichnet, daß der verformbare Werkstoff Azetylkopolymerisat ist und vorzugsweise wenigstens eine der folgenden Eigenschaften hat : er muß schwarz, stoßfest, oxydationsbeständig, wasserbeständig, photodegradationsbeständig und ultraviolettstrahlenbeständig sein.

8. Ventil nach Anspruch 1, dadurch gekennzeichnet, daß der Außendurchmesser (A) des Flanschs (23) circa 5% - 9% größer als der Mindestdurchmesser (B) des Durchgangs (16) in Ubereinstimmung mit der Verjüngung (11) ist.

9. Ventil nach Anspruch 1, dadurch gekennzeichnet, daß die Nadel (20) ein zugespitztes Innenende (22) aufweist.

10. Ventil nach Anspruch 1, bei dem das Dichtelement (40) in Ruhestellung die Form eines zylindrischen Rohres hat, dadurch gekennzeichnet, daß die Nadel, die das Dichtelement (40) aufnimmt, kegelstumpfförmig ist.

11. Ventil nach Anspruch 10, dadurch gekennzeichnet, daß das Dichtelement (40) einen Innendurchmesser (41) hat, der circa 25% seiner Länge (42) beträgt.

## Revendications

1. Vanne du type comprenant un corps de vanne (10) comprenant une partie extérieure, une partie intérieure, un passage (16) et un retrécissement (11) dans une portion intermédiaire du passage (16) et un pointeau de vanne (20) disposé coulissant dans le passage et portant un élément d'étanchéité (40) positionné de façon à s'appuyer contre une surface d'étanchéité (15) définie dans la partie intérieure qui est exposée à une pression intérieure de façon de fermer le passage (16), dans laquelle au moins un des éléments, le corps de vanne (10) et le pointeau, est realisé en matière élastique, et dans laquelle le pointeau de vanne (20) forme une bride (23) ayant un diamètre extérieur (A) légèrement plus grand que le moindre diamètre (B) du passage (16) en correspondence du retrécissement (11) dimensionné de telle façon que la déformation temporaire d'au moins un des éléments, le corps de vanne (10) et le pointeau (20) permette à la bride (23) de passer à travers le retrécissement (11) sans abîmer le pointeau (20) ni le corps de valve (10), caractérisée en ce qu'on prevoit des moyens en forme de gradin (14) dans le corps de valve (10) ayant une première surface de retenue du pointeau essentiellement orientée transversale par rapport à l'axe, autour du passage (16) dans la zone adjacente le retrécissement (11) ladite première surface (15) de retenue du pointeau étant positionnée entre ladite surface de retenue (15) et ledit retrécissement (11)., et des moyens susceptibles de définir une console (23a) sur la bride (23) ayant une seconde surface de retenue du pointeau essentiellement orientée transversale par rapport à l'axe et positionnée de façon à s'appuyer contre la première surface de retenue du pointeau afin d'empêcher le pointeau (20) d'être expulsé du passage (16) vers la partie extérieure.

2. Vanne selon la revendication 1 dans laquelle la première et la deuxième surface de retenue du pointeau ont une forme annulaire et dans laquelle le corps de vanne (10) comporte une surface conique évasé autour du passage (16) de la part du retrécissement (11) opposé au gradin (14) caractérisé en ce que ladite surface conique évasé (13) est inclinée d'un angle compris entre 27 ° et 33 ° par rapport à l'axe.

3. Vanne selon la revendication 2, caractérisée en ce que l'angle est de 30°.

4. Vanne selon la revendication 2, caractérisée en ce que ladite surface conique évasée (13) a un diamètre exterieur (C) qui est au moins 5% plus grand que le diamètre extérieur (A) de la bride (23).

5. Vanne selon la revendication 1, caractérisée en ce que la distance (D) entre la console (23a) et le gradin (14) est comprise dans un interval de 0,2 mm à 1 mm lorsque la pression differentielle à travers la surface d'étanchéité (15) est zero.

6. Vanne selon la revendication 1, caractérisée en ce qu'au moins un des éléments : le pointeau (20) et le corps de valve (10) est realisé en matière plastique.

7. Vanne selon la revendication 6 caractérisée en ce que la matière plastique est un copolymère acetylique ayant de preference au moins une des caractéristiques suivantes : être noir, resistant aux chocs, ne pas sujet à l'oxydation, resistant à l'eau, ne pas sujet à la photo dégradation et resistant aux rayons ultraviolets.

8. Vanne selon la revendication 1 caractérisée en ce que le diamètre extérieur (A) de la bride (23) est d'environ 5% - 9% plus grand que le moindre diamètre (B) du passage (16) en correspondence du retrécissement (11).

9. Vanne selon la revendication 1, caractérisée en ce que le pointeau (20) a une extremité intérieure pointue.

10. Vanne selon la revendication 1, dans laquelle l'élément d'étanchéité (40) a au repos la forme d'un tube cylindrique, caractérisé en ce que le pointeau (20) qui reçoit l'élément d'étanchéité (40) est de forme tronconique.

11. Vanne selon la revendication 10, caractérisé en ce que l'élément d'étanchéité (40) a un diamètre interieure (41) qui est d'environs le 25% de sa longueur (42).

FIG.1

FIG.3

FIG.2

FIG.4

6

FIG. 5

FIG. 6

FIG. 7